(19) Europäisches Patentamt / European Patent Office / Office européen des brevets

(11) **EP 4 286 336 A1**

(12) **EUROPEAN PATENT APPLICATION**
published in accordance with Art. 153(4) EPC

(43) Date of publication:
**06.12.2023 Bulletin 2023/49**

(51) International Patent Classification (IPC):
*C01F 7/021* (2022.01)    *C08K 3/22* (2006.01)
*C08K 9/00* (2006.01)    *C08L 9/00* (2006.01)
*C08L 25/02* (2006.01)    *C08L 71/12* (2006.01)
*C08L 101/00* (2006.01)

(21) Application number: 22745726.4

(22) Date of filing: 21.01.2022

(52) Cooperative Patent Classification (CPC):
**C01F 7/021; C08K 3/22; C08K 9/00; C08L 9/00;
C08L 25/02; C08L 71/12; C08L 101/00**

(86) International application number:
**PCT/JP2022/002097**

(87) International publication number:
**WO 2022/163505 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.01.2021   JP 2021010764

(71) Applicant: **Denka Company Limited
Tokyo 103-8338 (JP)**

(72) Inventors:
• **OKABE, Takuto
Tokyo 103-8338 (JP)**
• **FUKAZAWA, Motoharu
Tokyo 103-8338 (JP)**

(74) Representative: **Gulde & Partner
Patent- und Rechtsanwaltskanzlei mbB
Wallstraße 58/59
10179 Berlin (DE)**

(54) **SPHERICAL ALUMINA PARTICLES, METHOD FOR PRODUCING SAME, AND RESIN COMPOSITION**

(57)    Provided are spherical alumina particles to be mixed with a resin to obtain a resin composition having low dielectric loss tangent. The spherical alumina particles containing 90% by mass or more of an $\alpha$-alumina crystal phase, in which the spherical alumina particles have a half-width of an $\alpha$-alumina (113) peak of 0.124° or less as observed by X-ray diffraction and an average particle diameter of 0.5 to 40 $\mu$m.

Fig. 1

EP 4 286 336 A1

## Description

TECHNICAL FIELD

The present invention relates to spherical alumina particles, a method for producing the same, and a resin composition.

BACKGROUND ART

With the recent increase in the volume of information and communications in the field of communication, use of high-frequency bands has been spreading in electronic devices, communication devices, and the like. Therefore, materials for use in high-frequency devices are required to have low dielectric constant and low dielectric loss tangent. Further, related electronic materials and members have become increasingly smaller and highly integrated, and therefore materials for use in high-frequency devices are required to have higher heat dissipation properties.

Alumina ($Al_2O_3$) as a high-frequency ceramic material has a quality factor index Qf (which is a value obtained by multiplying the reciprocal of dielectric loss tangent and measurement frequency) of about 680,000 and a thermal conductivity of 30 W/m·K, and is therefore a promising material for a filler having low dielectric loss tangent and heat dissipation properties. The shape of the filler is preferably closer to a sphere to facilitate blending with a resin. Spherical alumina particles can easily be synthesized (for example, PTL 1) and have already been used for various purposes. Therefore, spherical alumina particles are expected to widely be used also in high-frequency dielectric devices and the like.

However, during synthesis, spherical alumina particles are reduced in crystallinity and the amount of water adsorbed to the surface or the amount of functional groups on the surface increases, and therefore a resin composition containing spherical alumina particles may be insufficient in dielectric loss tangent. For example, PTL 2 discloses that dielectric loss tangent can be reduced by subjecting alumina particles to surface treatment. However, the dielectric loss tangent is still insufficient, and there is no description about effects obtained by adding such alumina particles to a resin and effects in millimeter-wave regions.

On the other hand, PTL 3 discloses that alumina particles are subjected to heat treatment to increase an α conversion. PTL 4 discloses that an alumina powder is dried to reduce its water content.

CITATION LIST

PATENT LITERATURE

    PTL 1: Japanese Patent No. 4361997
    PTL 2: Japanese Patent No. 6603777
    PTL 3: Japanese Patent No. 6755116
    PTL 4: Japanese Patent Laid-Open No. 2015-193704

SUMMARY OF INVENTION

TECHNICAL PROBLEM

It is an object of the present invention to provide spherical alumina particles to be mixed with a resin to obtain a resin composition having low dielectric loss tangent, a method for producing the same, and the resin composition.

SOLUTION TO PROBLEM

The present invention includes the following embodiments.

    [1] Spherical alumina particles containing 90% by mass or more of an α-alumina crystal phase, wherein the spherical alumina particles have

        a half-width of an α-alumina(113) peak of 0.124° or less as observed by X-ray diffraction and
        an average particle diameter of 0.5 to 40 μm.

    [2] The spherical alumina particles according to [1], wherein an average circularity of the spherical alumina particles is 0.90 or more.

[3] The spherical alumina particles according to [1] or [2], wherein a total content of Li, Na, and K in the spherical alumina particles is less than 500 ppm by mass with respect to a total mass of the spherical alumina particles.

[4] The spherical alumina particles according to any one of [1] to [3], which have been subjected to surface treatment with a surface treatment agent.

[5] The spherical alumina particles according to any one of [1] to [4], wherein a polyethylene/alumina composite sheet containing 30% by volume of the spherical alumina particles in a polyethylene resin has a dielectric loss tangent of less than $4.0 \times 10^{-4}$ as measured by a resonator method at 30 to 40 GHz.

[6] A method for producing the spherical alumina particles according to any one of [1] to [5], the method including the step of:

heating raw material alumina particles having an average particle diameter of 0.5 to 40 $\mu$m and an average circularity of 0.90 or more at 1350 to 1700°C.

[7] A resin composition containing the spherical alumina particles according to any one of [1] to [5] and a resin.

[8] The resin composition according to [7], wherein a content of the spherical alumina particles in the resin composition is 2 to 90% by mass.

[9] The resin composition according to [7] or [8], wherein the resin is at least one selected from the group consisting of a hydrocarbon-based elastomer, a polyphenylene ether, and an aromatic polyene-based resin.

[10] The resin composition according to any one of [7] to [9], which is a resin composition for high-frequency substrates.

ADVANTAGEOUS EFFECTS OF INVENTION

The present invention can provide spherical alumina particles to be mixed with a resin to obtain a resin composition having low dielectric loss tangent, a method for producing the same, and the resin composition.

BRIEF DESCRIPTION OF DRAWING

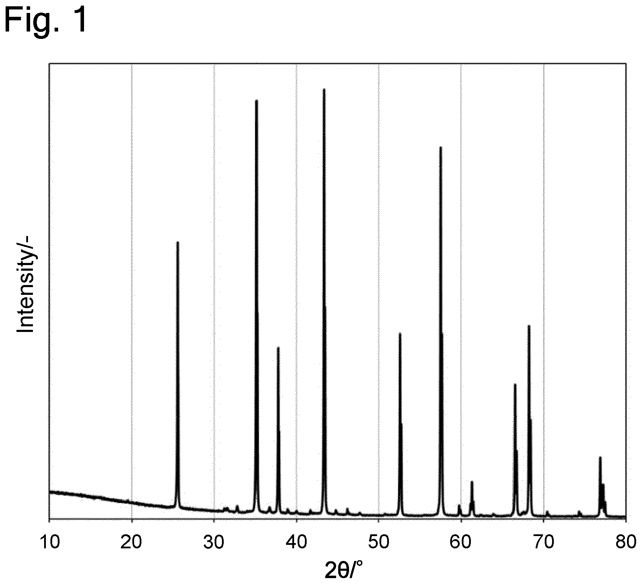

Fig. 1 is a diagram showing the X-ray diffraction pattern of spherical alumina particles of Example 1.

DESCRIPTION OF EMBODIMENTS

Hereinbelow, an embodiment of the present invention will be described. However, the present invention is not limited to the following embodiment.

[Spherical alumina particles]

Spherical alumina particles according to the present embodiment contain 90% by mass or more of an $\alpha$-alumina crystal phase. Here, the spherical alumina particles have a half-width of an $\alpha$-alumina (113) peak of 0.124° or less as observed by X-ray diffraction. The spherical alumina particles have an average particle diameter of 0.5 to 40 $\mu$m.

The spherical alumina particles according to the present embodiment have an $\alpha$-alumina crystal phase content as high as 90% by mass or more, a half-width of an $\alpha$-alumina (113) peak of 0.124° or less as observed by X-ray diffraction, and a large $\alpha$-alumina crystallite size, and therefore it is expected that low dielectric loss tangent can be achieved. Further, since the average particle diameter of the spherical alumina particles according to the present embodiment is 0.5 to 40 $\mu$m, the spherical alumina particles are easily blended with a resin and it is considered that sufficiently low dielectric loss tangent can be achieved also when the spherical alumina particles are mixed with a resin. It should be noted that "spherical" of the spherical alumina particles means that an average circularity measured by the method described later is 0.80 or more.

The spherical alumina particles according to the present embodiment contain 90% by mass or more of an $\alpha$-alumina crystal phase. When the content of an $\alpha$-alumina crystal phase is less than 90% by mass, dielectric loss tangent increases. The content of an $\alpha$-alumina crystal phase is preferably 93% by mass or more, more preferably 95% by mass or more, and even more preferably 98% by mass or more. Further, the content of an $\alpha$-alumina crystal phase may be 100% by mass.

It should be noted that the content of an $\alpha$-alumina crystal phase is measured by powder X-ray diffraction measurement. As a measurement device, a sample horizontal-type multipurpose X-ray diffractometer (manufactured by Rigaku Corporation, trade name: RINT-Ultima IV) is used. Measurement is performed under the following conditions: X-ray source: CuK$\alpha$, tube voltage: 40 kV, tube current: 40 mA, scan speed: 10.0°/min, and 2$\Theta$ scan range: 10° to 80°. The content of an $\alpha$-alumina crystal phase is calculated from the ratio ((A/B)* 100) of the total peak area (A) of $\alpha$-alumina (012), (104), and (113) peaks observed by X-ray diffraction measurement of a measurement sample to the total peak area (B) of α-alumina (012), (104), and (113) peaks observed by X-ray diffraction measurement of an α-alumina reference sample for X-ray diffraction manufactured by NIST.

The spherical alumina particles according to the present embodiment may contain an additional crystal phase other than an α-alumina crystal phase as long as the spherical alumina particles contain 90% by mass or more of an α-alumina crystal phase. Examples of the additional crystal phase include θ-alumina and γ-alumina. However, from the viewpoint of increasing the content of an α-alumina crystal phase, the content of the additional crystal phase is preferably low. The content of the additional crystal phase is preferably less than 10% by mass, more preferably less than 5% by mass, and even more preferably less than 2% by mass. It is preferred that the spherical alumina particles according to the present embodiment do not contain the additional crystal phase.

The spherical alumina particles according to the present embodiment have a half-width of an α-alumina (113) peak of 0.124° or less as observed by X-ray diffraction. If the half-width exceeds 0.124°, the crystallinity of α-alumina reduces so that dielectric loss tangent increases. The half-width is preferably 0.122° or less, and more preferably 0.120° or less. The crystallinity of α-alumina increases as the half-width becomes narrower, and therefore the half-width is preferably narrower. It should be noted that the half-width is measured by powder X-ray diffraction measurement of a measurement sample in the same manner as in the measurement of the content of an α-alumina crystal phase.

The spherical alumina particles according to the present embodiment have an average particle diameter of 0.5 to 40 μm. If the average particle diameter is less than 0.5 μm or more than 40 μm, it is difficult to blend the spherical alumina particles with a resin. The average particle diameter is preferably 0.8 to 30 μm, and more preferably 1 to 18 μm. It should be noted that the average particle diameter is measured using a laser diffraction particle size distribution analyzer. Specifically, the average particle diameter can be measured by the method described later.

The average circularity of the spherical alumina particles according to the present embodiment is preferably 0.90 or more. When the average circularity is 0.90 or more, an increase in viscosity or a reduction in fluidity can be prevented when the spherical alumina particles are mixed with a resin, and therefore processability and fillability improve. The average circularity is more preferably 0.93 or more, and even more preferably 0.95 or more. The upper limit of the average circularity is not limited. The average circularity is preferably as high as possible and may be 1. The shape of the spherical alumina particles reflects the shape of raw material alumina particles before heating. Therefore, when produced using raw material alumina particles having a high average circularity, the spherical alumina particles can have high average circularity. It should be noted that the average circularity can be measured by the method described later.

From the viewpoint of a reduction in dielectric loss tangent and the reliability of electronic materials, the total content of Li, Na, and K in the spherical alumina particles according to the present embodiment is preferably less than 500 ppm by mass, more preferably less than 250 ppm by mass, even more preferably less than 150 ppm by mass with respect to the total mass of the spherical alumina particles, and particularly preferably the spherical alumina particles do not contain Li, Na, and K. It should be noted that the content of Li, Na, and K can be measured by the method described later. Further, from the viewpoint of a reduction in dielectric loss tangent and the reliability of electronic materials, the content of metal elements, such as Fe, as impurities and the content of anions such as Cl$^-$ and Br$^-$ in the spherical alumina particles are preferably as low as possible.

The spherical alumina particles according to the present embodiment have preferably been subjected to surface treatment with a surface treatment agent. The surface treatment with a surface treatment agent can further increase the amount of the spherical alumina particles to be blended with (contained in) a resin and may further reduce dielectric loss tangent. The surface treatment agent used may be, for example, a coupling agent. Examples of the coupling agent include a silane coupling agent, a titanate coupling agent, and an aluminate-based coupling agent. Specific examples of the surface treatment agent include hexamethyldisilazane (HMDS), vinyltrimethoxysilane, and 7-octenyltrimethoxysilane. These surface treatment agents may be used singly or in combination of two or more. The amount of surface treatment with a surface treatment agent is not limited, and for example, the amount of the surface treatment agent may be 0.01 to 5 parts by mass per 100 parts by mass of the spherical alumina particles. It should be noted that when the spherical alumina particles have been subjected to surface treatment with a surface treatment agent, measurements of the content of an α-alumina crystal phase, the half-width of an α-alumina (113) peak, the average particle diameter, the average circularity, the content of Li, Na, and K, and others are performed on the spherical alumina particles after surface treatment.

The dielectric loss tangent of a polyethylene/alumina composite sheet containing 30% by volume of the spherical alumina particles according to the present embodiment in a polyethylene resin is preferably less than $4.0 \times 10^{-4}$, more preferably less than $3.6 \times 10^{-4}$, and even more preferably less than $3.2 \times 10^{-4}$ as measured by a resonator method at 30 to 40 GHz. When the dielectric loss tangent is less than $4.0 \times 10^{-4}$, a resin composition containing the spherical alumina particles has low dielectric loss tangent, and therefore the spherical alumina particles are suitable as a filler or the like to be contained in, for example, a resin composition for high-frequency substrates. The dielectric characteristics at 30 to 40 GHz can be measured by, for example, a 36 GHz cavity resonator, a 40 GHz split cylinder resonator, or a balanced-type circular disk resonator, etc. From the viewpoint of high accuracy, the dielectric characteristics at 30 to 40 GHz is preferably measured by a 36 GHz cavity resonator or a 40 GHz split cylinder resonator. It should be noted that the dielectric loss tangent can be measured by the method described later.

The thermal conductivity of an epoxy resin/alumina composite sheet containing 40% by volume of the spherical alumina particles according to the present embodiment in an epoxy resin is preferably 1.1 W/m·K or more, more preferably 1.2 W/m·K or more, and even more preferably 1.3 W/m·K or more. When the thermal conductivity is 1.1 W/m·K or more, a resin composition containing the spherical alumina particles has high thermal conductivity (heat dissipation properties), and therefore the spherical alumina particles are suitable as a filler or the like to be contained in, for example, a resin composition for high-frequency substrates. It should be noted that the thermal conductivity can be measured by the method described later.

When the spherical alumina particles according to the present embodiment are mixed with a resin to obtain a resin composition, the resin composition can have low dielectric loss tangent. Therefore, the spherical alumina particles according to the present embodiment are useful as a filler to be contained in a resin composition required to have low dielectric loss tangent. For example, the spherical alumina particles are suitable as a filler to be contained in a resin composition for high-frequency substrates.

[Method for producing spherical alumina particles]

A method for producing spherical alumina particles according to the present embodiment includes the step of heating raw material alumina particles having an average particle diameter of 0.5 to 40 $\mu$m and an average circularity of 0.90 or more at 1350 to 1700°C (hereinafter also referred to as heating step). The method according to the present embodiment may include another step in addition to the heating step. The method according to the present embodiment can easily and efficiently produce the spherical alumina particles according to the present embodiment.

(Heating step)

In this step, raw material alumina particles having an average particle diameter of 0.5 to 40 $\mu$m and an average circularity of 0.90 or more are heated at 1350 to 1700°C. The raw material alumina particles are not limited in crystal system, and may be amorphous, $\alpha$ phase, $\delta$ phase, $\gamma$ phase, or the like, and a method for producing the raw material alumina particles is not limited, either. However, spherical alumina produced by a powder melting method is preferably used. A powder melting method is a method in which non-spherical alumina, aluminum hydroxide, boehmite, or the like is introduced into a high-temperature field at or above the melting point, such as flame, plasma, an electric furnace, or a gas furnace, to obtain spherical particles. The particle diameter of spherical alumina particles obtained in the heating step reflects the particle diameter of the raw material alumina particles, and therefore the average particle diameter of the raw material alumina particles is preferably 0.5 to 40 $\mu$m, more preferably 0.8 to 30 $\mu$m, and even more preferably 1 to 18 $\mu$m, and the average circularity of the raw material alumina particles is preferably 0.90 or more, more preferably 0.93 or more, and even more preferably 0.95 or more. It should be noted that the average particle diameter and average circularity of the raw material alumina particles are measured in the same manner as those of the spherical alumina particles.

A heating device for heating the raw material alumina particles is not limited as long as high-temperature heating can be performed, and examples thereof include an electric furnace, a rotary kiln, and a pusher furnace. A heating atmosphere is not limited, and examples thereof include air, $N_2$, Ar, and vacuum. A heating temperature is preferably 1350 to 1700°C, more preferably 1400 to 1600°C, and even more preferably 1400 to 1550°C. When the heating temperature is 1350°C or higher, the content of an $\alpha$-alumina crystal phase increases and the crystallinity of $\alpha$-alumina can be increased so that lower dielectric loss tangent can be achieved. Further, when the heating temperature is 1700°C or lower, formation of agglomerates caused by fusion between particles can be prevented, and therefore resulting spherical alumina particles can suitably be used as a filler to be mixed with a resin. A heating time depends on the heating temperature, but is preferably 1 to 24 hours, more preferably 2 to 20 hours, and even more preferably 2 to 12 hours. When the heating time is 1 hour or more, the content of an $\alpha$-alumina crystal phase increases and the crystallinity of $\alpha$-alumina can be increased so that lower dielectric loss tangent can be achieved. Further, when the heating time is 24 hours or less, productivity can be improved.

The spherical alumina particles obtained after heating may be in the form of agglomerates obtained by agglomeration of the particles. The agglomerates may directly be used as spherical alumina particles. However, if necessary, the agglomerates may be disintegrated before used as spherical alumina particles. A method for disintegrating the agglomerates is not limited and may be, for example, a method using an agate mortar, a ball mill, a vibration mill, a jet mill, or a wet jet mill. The disintegration may be performed either by a dry method or a wet method in which the agglomerates are mixed with a liquid such as water or an alcohol. In the case of wet disintegration, spherical alumina particles are obtained by performing drying after disintegration. A method for drying is not limited, and examples thereof include heat drying, vacuum drying, freeze drying, and supercritical carbon dioxide drying.

(Another step)

The method for producing spherical alumina particles according to the present embodiment may further include, in addition to the heating step, another step such as a classification step in which the spherical alumina particles are classified to achieve a desired average particle diameter, a surface treatment step in which the spherical alumina particles are subjected to surface treatment with a surface treatment agent such as a coupling agent, or a washing step to reduce impurities. The type and amount of the surface treatment agent used in the surface treatment step may be the same as those of the surface treatment agent described above.

[Resin composition]

A resin composition according to the present embodiment contains the spherical alumina particles according to the present embodiment and a resin. The resin composition according to the present embodiment contains the spherical alumina particles according to the present embodiment and therefore can have low dielectric loss tangent. Further, the resin composition containing the spherical alumina particles according to the present embodiment has low viscosity and therefore has high fluidity and excellent moldability.

The resin is not limited, and examples thereof include polyethylene, polypropylene, epoxy resins, silicone resins, phenol resins, melamine resins, urea resins, unsaturated polyesters, fluorine resins, polyamides such as polyimides, polyamideimides, and polyetherimides, polyesters such as polybutylene terephthalate and polyethylene terephthalate, polyphenylene sulfides, wholly aromatic polyesters, polysulfones, liquid crystal polymers, polyether sulfones, polycarbonates, modified maleimide resins, ABS resins, AAS (acrylonitrile-acrylic rubber-styrene) resins, and AES (acrylonitrile-ethylene/propylene/diene rubber-styrene) resins. These resins may be used singly or in combination of two or more.

The content of the spherical alumina particles in the resin composition is appropriately selected depending on desired physical properties such as dielectric loss tangent, but is preferably 2 to 90% by mass, more preferably 10 to 80% by mass, and even more preferably 10 to 70% by mass. The content of the resin in the resin composition is preferably 10 to 98% by mass, more preferably 30 to 90% by mass, and even more preferably 30 to 70% by mass.

A mixed powder obtained by mixing the spherical alumina particles according to the present embodiment with powder different from the spherical alumina particles according to the present embodiment in specific surface area, average particle diameter, and composition may be mixed with a resin to prepare a resin composition. By mixing the mixed powder with a resin, it is possible to more easily adjust the dielectric constant, dielectric loss tangent, thermal expansion coefficient, thermal conductivity, filling factor, and others of the resin composition.

The optimum value of dielectric loss tangent of the resin composition according to the present embodiment varies depending on, for example, the type of the resin, the amount of the spherical alumina particles according to the present embodiment blended, or the presence or absence of an additive. However, the dielectric loss tangent of a resin composition obtained by blending 30% by volume of the spherical alumina particles according to the present embodiment with a low dielectric loss tangent resin, such as polytetrafluoroethylene, polyethylene, or propylene, as measured by a resonator method at 30 to 40 GHz is preferably less than $4.0 \times 10^{-4}$, more preferably less than $3.6 \times 10^{-4}$, and even more preferably less than $3.2 \times 10^{-4}$. The optimum value of thermal conductivity of the resin composition according to the present embodiment varies depending on, for example, the type of the resin, the amount of the spherical alumina particles according to the present embodiment blended, or the presence or absence of an additive. However, for example, the thermal conductivity of a resin composition containing 40% by volume of the spherical alumina particles according to the present embodiment in an epoxy resin is preferably 1.1 W/m·K or more, more preferably 1.2 W/m·K or more, and even more preferably 1.3 W/m·K or more. It should be noted that the dielectric loss tangent and thermal conductivity of the resin composition are measured by the method described later.

The resin composition according to the present embodiment has low dielectric loss tangent, and is therefore particularly useful as a resin composition for high-frequency substrates. Specific examples of the high-frequency substrates include fluorine substrates, PPE substrates, and ceramic substrates. When the resin composition according to the present embodiment is used as a material for such high-frequency substrates or an insulating material, a low-dielectric resin can be used as a resin constituting the resin composition. Examples of the low-dielectric resin include a hydrocarbon-based elastomer, a polyphenylene ether, and an aromatic polyene-based resin, and a hydrocarbon-based elastomer or a polyphenylene ether is preferred. These resins may be used singly or in combination of two or more. After the spherical alumina particles according to the present embodiment are blended with such a resin, the resin may be crosslinked or cured, if necessary. The mass ratio between the spherical alumina particles or the mixed powder and the resin (spherical alumina particles or mixed powder:resin) is not limited, but may be, for example, 5:95 to 80:20 or 5:95 to 70:30.

Examples of the hydrocarbon-based elastomer include an ethylene-based elastomer, a propylene-based elastomer, a conjugated diene-based polymer, and an aromatic vinyl compound-conjugated diene-based block copolymer or random copolymer and a hydride (hydrogenated product) thereof. Examples of the ethylene-based elastomer include an ethylene-$\alpha$ olefin copolymer such as an ethylene-octene copolymer or an ethylene-1-hexene copolymer, EPR, and EPDM. Examples of the propylene-based elastomer include atactic polypropylene, low stereoregular polypropylene, and a propylene-α-olefin copolymer such as a propylene-1-butene copolymer. Examples of the conjugated diene-based polymer include polybutadiene and 1,2-polybutadiene. Examples of the aromatic vinyl compound-conjugated diene-based block copolymer or random copolymer and a hydride (hydrogenated product) thereof include SBS, SIS, SEBS, SEPS, SEEPS, and SEEBS.

These hydrocarbon-based elastomers may be used singly or in combination of two or more. Among them, the hydrocarbon-based elastomer is preferably a conjugated diene-based polymer, and more preferably 1,2-polybutadiene. 1,2-Polybutadiene is commercially available from, for example, JSR Corporation and from Nippon Soda Co., Ltd. as liquid polybutadiene: product name B-1000, 2000, 3000. A commercialized product of a 1,2-polybutadiene structure-containing copolymer that can suitably be used is, for example, "Ricon100" manufactured by TOTAL CRAY VALLEY, etc. The number-average molecular weight of the hydrocarbon-based elastomer is preferably 1,000 or more, and more preferably 10,000 or more.

The polyphenylene ether may be a commercially-available known polyphenylene ether. The number-average molecular weight of the polyphenylene ether is not limited, but is preferably 10,000 or less, and more preferably 5,000 or less in consideration of the molding processability of the composition. The number-average molecular weight is preferably 500 or more. When the polyphenylene ether is added for the purpose of curing the composition, the molecular ends are preferably modified and/or two or more functional groups are preferably contained in one molecule. Examples of the functional group include an allyl group, a vinyl group, and an epoxy group. Further, the functional group is preferably a radical polymerizable functional group, and more preferably a vinyl group. The vinyl group is preferably a (meth)acrylic group or an aromatic vinyl group. More preferred is a bifunctional polyphenylene ether whose molecular chain both ends are modified with radical polymerizable functional groups. Examples of a commercialized product of such a polyphenylene ether include Noryl (trademark) SA9000 manufactured by SABIC and a bifunctional polyphenylene ether oligomer (OPE-2St) manufactured by

MITSUBISHI GAS CHEMICAL COMPANY, INC.

The aromatic polyene-based resin includes a divinylbenzene-based reactive multibranched copolymer (PDV). Such PDV is described in, for example, "Syntheses of Multi-Functional Aromatic Copolymers (PDVs) with Controlled Molecular Architectures and Development of Novel Low Dielectric Loss Materials from PDVs" (Masanao KAWABE et al., Journal of the Japan Institute of Electronics Packaging, p. 125, Vol. 12, No. 2 (2009)). Examples of commercially-available PDVs include PDVs manufactured by NIPPON STEEL Chemical & Material Co., Ltd. The aromatic polyene-based resin includes an aromatic polyene polymer resin containing the aromatic polyene monomer as a main structural unit.

When the resin composition according to the present embodiment is prepared using the spherical alumina particles according to the present embodiment or the mixed powder and the resin, the resin may be crosslinked or cured using a crosslinking agent or a curing agent. Examples of the crosslinking agent include various maleimides, bismaleimides, maleic anhydride, glycidyl (meth)acrylate, triallyl isocyanurate, tri(meth)acryl isocyanurate, and trimethylolpropane tri(meth)acrylate. These crosslinking agents may be used singly or in combination of two or more. Maleimides and bismaleimides are described in, for example, International Publication No. WO 2016/114287, and are commercially available from, for example, Daiwa Kasei Industry Co., Ltd. Such a maleimide group-containing compound may be used as a polyaminobismaleimide compound from the viewpoint of solubility in organic solvent, high-frequency characteristics, high adhesiveness to conductor, prepreg formability and the like. The polyaminobismaleimide compound can be obtained by, for example, Michael addition reaction between a compound having two maleimide groups at the ends and an aromatic diamine compound having two primary amino groups in the molecule. In order to achieve high crosslinking efficiency by addition of a small amount of the crosslinking agent, the crosslinking agent used preferably has a bi- or higher-valent polyfunctional group. Examples of such a crosslinking agent include bismaleimides, triallyl isocyanurate (TAIC), trimethylolpropane tri(meth)acrylate. When the crosslinking agent is used, the amount of the crosslinking agent is preferably 0.1 to 30 parts by mass, and more preferably 0.1 to 10 parts by mass per 100 parts by mass of the resin.

The curing agent may be a known curing agent that can be used for polymerization or curing of an aromatic polyene or an aromatic vinyl compound. Examples of such a curing agent include a radical polymerization initiator, a cationic polymerization initiator, and an anionic polymerization initiator, and a radical polymerization initiator is preferred. More preferred are an organic peroxide-based polymerization initiator, an azo-based polymerization initiator, and the like, and any of these can freely be selected depending on the intended use and conditions. Commercialized products of the organic peroxide are available from, for example, NOF CORPORATION, Wako Pure Chemical Industries, Ltd., Tokyo Chemical Industries Co., Ltd., and others, and are shown in catalogs posted on the Websites of these companies. Alternatively, the curing agent may be a known photopolymerization initiator using light, ultraviolet light, or radioactive rays. Examples of the photopolymerization initiator include a photoradical polymerization initiator, a photocationic polymerization initiator, and a photoanionic polymerization initiator. Such photopolymerization initiators are commercially available from, for example, Tokyo Chemical Industries Co., Ltd. Alternatively, curing may be performed by radioactive rays or electron rays per se. Further, crosslinking or curing may be performed not by using a curing agent but by thermal polymerization of a raw material contained. When the curing agent is used, the amount of the curing agent to be used is not limited, but is preferably 0.01 to 10 parts by mass per 100 parts by mass of the resin. When the curing agent such as a peroxide-based polymerization initiator or an azo-based polymerization initiator is used, curing treatment can be performed at an appropriate temperature for an appropriate time period in consideration of the half-life thereof. These conditions in this case depend on the type of the curing agent, but an appropriate temperature range is about 50°C to 180°C.

The various resins, crosslinking agents, curing agents, and others used when the spherical alumina particles according to the present embodiment or the mixed powder are/is used as a material for high-frequency substrates or an insulating material are described in, for example, the following patent literatures: Japanese Patent Laid-Open No. 8-208856, Japanese Patent Laid-Open No. 2017-75270, Japanese Patent Laid-Open No. 2009-167268, Japanese Patent Laid-Open No. 2011-68713, Japanese Patent Laid-Open No. 2018-131519, Japanese Translation of PCT International Application Publication No. 2016-534549, Japanese Patent Laid-Open No. 2017-57352, International Publication No. WO 2016/175325, and International Publication No. WO 2016/175326.

EXAMPLES

Hereinbelow, the present invention will more specifically be described with reference to examples, but the present invention is not limited to these examples.

[Example 1]

50 g of raw material alumina particles 1 (manufactured by Denka Company Limited, trade name: DAW-05, average particle diameter: 5.1 $\mu$m, average circularity: 0.95) were placed as raw material alumina particles in an alumina crucible and subjected to heat treatment in an electric furnace at 1400°C for 4 hours in an air atmosphere. After the heat treatment, the powder was naturally cooled until the temperature in the furnace was reduced to 200°C or lower, collected, and disintegrated in a mortar to obtain spherical alumina particles.

[Examples 2 and 3]

Spherical alumina particles were prepared in the same manner as in Example 1 except that the heating temperature or the heating time in the heat treatment was changed as shown in Table 1.

[Example 4]

Spherical alumina particles were prepared in the same manner as in Example 1 except that raw material alumina particles 2 (manufactured by Denka Company Limited, trade name: DAW-15, average particle diameter: 15.2 $\mu$m, average circularity: 0.97) were used as raw material alumina particles and that the heating temperature was changed as shown in Table 1.

[Example 5]

As a surface treatment agent, 0.1 parts by mass of hexamethyldisilazane (HMDS) (manufactured by Shin-Etsu Chemical Co., Ltd., trade name: SZ-31) was added to 100 parts by mass of the spherical alumina particles obtained in Example 1. Then, the resultant was mixed by a vibration mixer manufactured by Resodyn with an acceleration of 60 G for 2 minutes and dried in a mixed powder vacuum dryer (in an environment of 120°C and less than 133 Pa) for 24 hours. In this way, surface-treated spherical alumina particles were prepared.

[Example 6]

Surface-treated spherical alumina particles were prepared in the same manner as in Example 5 except that 1 part by mass of vinyltrimethoxysilane (manufactured by Shin-Etsu Chemical Co., Ltd., trade name: KBM-1003) was added as a surface treatment agent.

[Example 7]

Spherical alumina particles were prepared in the same manner as in Example 1 except that raw material alumina particles 3 (manufactured by Denka Company Limited, trade name: DAW-0105, average particle diameter: 1.0 μm, average circularity: 0.96) were used as raw material alumina particles and that the heating time was changed as shown in Table 1.

[Example 8]

Spherical alumina particles were prepared in the same manner as in Example 1 except that raw material alumina particles 4 (manufactured by Denka Company Limited, trade name: DAM-05, average particle diameter: 5.0 μm, average circularity: 0.95) were used as raw material alumina particles.

[Example 9]

The evaluation of dielectric constant and dielectric loss tangent of a resin composition containing the spherical alumina particles obtained in Example 1 described later was performed using polypropylene (manufactured by Sumitomo Seika Chemicals Company, Limited., trade name: FLO-BLEN QB200) as a resin.

[Comparative Examples 1 to 3]

Spherical alumina particles were prepared in the same manner as in Example 1 except that the heating temperature and/or the heating time in the heat treatment were/was changed as shown in Table 2.

[Comparative Example 4]

Spherical alumina particles were prepared in the same manner as in Example 1 except that raw material alumina particles 5 (manufactured by Denka Company Limited, trade name: ASFP-20, average particle diameter: 0.3 μm, average circularity: 0.95) were used as raw material alumina particles and that the heating temperature was changed as shown in Table 2.

[Comparative Example 5]

The evaluation of dielectric constant and dielectric loss tangent of a resin composition containing the spherical alumina particles obtained in Comparative Example 2 described later was performed using polypropylene (manufactured by Sumitomo Seika Chemicals Company, Limited., trade name: FLO-BLEN QB200) as a resin.

The characteristics of the spherical alumina particles prepared in Examples and Comparative Examples and the raw material alumina particles 1 to 5 per se as Reference Examples 1 to 5 were evaluated by the methods described below. The evaluation results are shown in Tables 1 to 3.

[Average circularity]

The spherical alumina particles or raw material alumina particles were fixed to a sample stage by a carbon tape and then subjected to osmium coating, and an image thereof with a magnification of 500 to 50000× and a resolution of 1280 × 1024 pixels taken by a scanning electron microscope (manufactured by JEOL Ltd., trade name: JSM-7001F SHL) was loaded into a personal computer. From the image, the projected area (S) and projected perimeter (L) of a single particle were calculated using an image analyzer (manufactured by Nippon Roper, K.K., trade name: Image-Pro Premier Ver. 9.3), and the circularity of the particle was calculated by the following formula (1). The circularities of randomly-selected 200 particles having a projected area diameter of 0.8 to 50 μm were calculated in such a manner as described above, and the average thereof was determined as an average circularity.

$$\text{Circularity} = 4\pi S / L^2 \, (1)$$

[Density]

2.0 g of the spherical alumina particles or raw material alumina particles were placed in a sample cell for measurement, and the density was measured by a gas (helium) replacement method using a dry densitometer (manufactured by SHIMADZU CORPORATION, trade name: AccuPyc II 1340).

[Average particle diameter]

The average particle diameter was measured using a laser diffraction particle size distribution analyzer (manufactured by Beckman Coulter, Inc., trade name: LS 13 320). 50 cm$^3$ of pure water and 0.1 g of the spherical alumina particles or raw material alumina particles were placed in a glass beaker and subjected to dispersion treatment for 1 minute in an ultrasonic homogenizer (manufactured by BRANSON, trade name: SFX250). The dispersion liquid of the powder obtained by dispersion treatment was added drop by drop with a dropper to the laser diffraction particle size distribution analyzer, and measurement was performed 30 seconds after a predetermined amount of the dispersion liquid was added. From the data of light intensity distribution of diffracted/scattered light by the particles detected by a sensor in the laser diffraction particle size distribution analyzer, particle size distribution was calculated. The average particle diameter was determined by multiplying the value of a measured particle diameter by a relative particle volume (percentage difference) and dividing by the total relative particle volume (100%). It should be noted that % herein means % by volume.

[Measurement of α-alumina crystal phase content and half-width of (113) peak]

Identification of an α-alumina crystal phase contained in the spherical alumina particles or raw material alumina particles and measurement of an α-alumina crystal phase content and the half-width of a (113) peak were performed by powder X-ray diffraction measurement. As a measurement device, a sample horizontal-type multipurpose X-ray diffractometer (manufactured by Rigaku Corporation, trade name: RINT-Ultima IV) was used. Measurement was performed under the following conditions: X-ray source: CuKα, tube voltage: 40 kV, tube current: 40 mA, scan speed: 10.0°/min, and 2θ scan range: 10° to 80°. As a reference, the X-ray diffraction pattern of the spherical alumina particles prepared in Example 1 is shown in Fig. 1. The content of an α-alumina crystal phase is calculated from the ratio ((A/B)* 100) of the total peak area (A) of α-alumina (012), (104), and (113) peaks observed by X-ray diffraction measurement of a measurement sample to the total peak area (B) of α-alumina (012), (104), and (113) peaks observed by X-ray diffraction measurement of an α-alumina reference sample for X-ray diffraction manufactured by NIST. Further, the half-width of the α-alumina (113) peak was calculated.

[Measurement of content of Li, Na, and K]

The content of Li, Na, and K was measured by inductively coupled plasma emission spectrometry. As an analyzer, an ICP emission spectrometer (manufactured by SPECTRO Analytical Instruments GmbH, trade name: CIROS-120) was used. 0.1 g of the spherical alumina particles or raw material alumina particles were weighed in a platinum crucible and subjected to pressure acid decomposition at 200°C using hydrofluoric acid and sulfuric acid to prepare a measurement solution, and then measurement was performed. It should be noted that the content of Li, Na, and K in Tables 1 to 3 refers to the total content of Li, Na, and K.

[Thermal conductivity of resin composition]

A resin composition was prepared in the following manner. 25.6 parts by mass of a bisphenol A-type liquid epoxy resin (manufactured by Mitsubishi Chemical Corporation, trade name: JER828) and 6.4 parts by mass of 4,4'-diaminophenylmethane (manufactured by Tokyo Chemical Industry Co., Ltd.) were mixed while being melted at 95°C. Then, the spherical alumina particles or raw material alumina particles were added to the mixture so that the content thereof was 40% by volume (when the density was 3.7 g/cm$^3$, 66 parts by mass), and the resultant was mixed by a planetary stirrer (manufactured by THINKY CORPORATION, trade name: Awatori Rentaro AR-250, rotation speed 2000 rpm). The obtained mixture was poured into a silicone mold (2 cm square × 6 mm thickness) previously heated to 80°C and cured by hot press using a vacuum hot press machine (manufactured by Imoto machinery Co., LTD, trade name: IMC-1674-A) under the conditions of 80°C/1 hour/3 MPa, then 150°C/1 hour/5 MPa, and then 200°C/0.5 hours/7 MPa to obtain a resin composition. The thermal conductivity of the resin composition was calculated by multiplying all of thermal diffusivity, specific gravity, and specific heat. The thermal diffusivity was determined by a laser flash method using the cured sample processed to have a size of 10 mm wide × 10 mm × 1 mm thick. As a measurement device, a xenon flash analyzer (manufactured by NETZSCH, trade name: LFA447 NanoFlash) was used. The specific gravity was determined using the Archimedes method. The specific heat was determined using a differential scanning calorimeter (manufactured by TA Instruments, trade name: Q2000) by increasing the temperature from a room temperature to 200°C at a temperature rise rate of 10°C/min in a nitrogen atmosphere.

[Dielectric constant and dielectric loss tangent of resin composition]

The spherical alumina particles or raw material alumina particles and a polyethylene powder (manufactured by Sumitomo Seika Chemicals Company, Limited., trade name: FLO-THENE UF-20S; Examples 1 to 8, Comparative Examples 1 to 4, Reference Examples 1 to 5) or a polypropylene powder (manufactured by Sumitomo Seika Chemicals Company, Limited., trade name: FLO-BLEN QB200; only Example 9 and Comparative Example 5) were weighed so that the content of the spherical alumina particles or raw material alumina particles was 30% by volume, and were mixed by a vibration mixer manufactured by Resodyn (acceleration 60 G, treatment time 2 minutes). A predetermined volume of the obtained mixed powder was weighed (so that the thickness was about 0.3 mm), placed in a metallic frame having a diameter of 3 cm, and formed into a sheet by a nanoimprint device (manufactured by SCIVAX, trade name: X-300) under the conditions of 140°C, 5 minutes, and 30000 N in the case of polyethylene or 190°C, 5 minutes, and 30000 N in the case of polypropylene to obtain an evaluation sample. The sheet as the evaluation sample had a thickness of about 0.3 mm. The shape or size of the evaluation sample does not influence the evaluation results as long as the evaluation sample can be loaded in a measurement device, but was about 1.5 cm square.

The dielectric constant and the dielectric loss tangent were measured by the following method. A 36 GHz cavity resonator (manufactured by SUMTEC, Inc.) was connected to a vector network analyzer (trade name: 85107, manufactured by Keysight Technologies), and the evaluation sample (1.5 cm square, thickness 0.3 mm) was set to cover a hole provided in the resonator and having a diameter of 10 mm to measure a resonance frequency (f0) and an unloaded Q value (Qu). The evaluation sample was rotated after every measurement to repeat the measurement 5 times in the same manner. The average of the obtained values of f0 and the average of the obtained values of Qu were determined as measured values. The dielectric constant and the dielectric loss tangent (tan$\delta$c) were respectively calculated from f0 and Qu using analysis software (software manufactured by SUMTEC, Inc.). The measurement temperature was 20°C and the humidity was 60%RH. It should be noted that the dielectric constant and dielectric loss tangent of a sheet of polyethylene containing no filler obtained under the same conditions were 2.3 and $2.6 \times 10^{-4}$, respectively.

[Table 1]

| | Unit | Example 1 | Example 2 | Example 3 | Example 4 | Example 5 | Example 6 | Example 7 | Example 8 | Example 9 |
|---|---|---|---|---|---|---|---|---|---|---|
| Type of raw material alumina particles | - | DAW-05 | DAW-05 | DAW-05 | DAW-15 | DAW-05 | DAW-05 | DAW-0105 | DAM-05 | DAW-05 |
| Heating temperature | °C | 1400 | 1500 | 1400 | 1450 | 1400 | 1400 | 1400 | 1400 | 1400 |
| Heating time | h | 4 | 4 | 16 | 4 | 4 | 4 | 2 | 4 | 4 |
| Surface treatment | - | - | - | - | - | HMDS | Vinyl Trimethoxy silane | - | - | - |
| Average circularity | - | 0.95 | 0.91 | 0.94 | 0.93 | 0.92 | 0.93 | 0.97 | 0.96 | 0.95 |
| Density | $g/cm^3$ | 3.9 | 4.0 | 3.9 | 4.0 | 3.9 | 3.9 | 3.9 | 3.9 | 3.9 |
| Average particle diameter | $\mu m$ | 6.0 | 6.0 | 6.0 | 18.0 | 5.7 | 5.7 | 1.2 | 5.4 | 6.0 |
| $\alpha$-Alumina crystal phase content | % by mass | 98 | 100 | 99 | 100 | 98 | 98 | 99 | 98 | 98 |
| Half-width of $\alpha$-alumina(113) peak | ° | 0.119 | 0.117 | 0.120 | 0.115 | 0.118 | 0.118 | 0.121 | 0.119 | 0.119 |
| Content of Li, Na, and K | ppm by mass | 260 | 220 | 220 | 140 | 260 | 250 | 290 | 520 | 260 |
| Thermal conductivity of resin composition | W/m·K | 1.2 | 1.2 | 1.3 | 1.3 | 1.3 | 1.3 | 1.2 | 1.2 | 1.2 |
| Dielectric constant of resin composition | - | 3.6 | 3.6 | 3.5 | 3.6 | 3.6 | 3.5 | 3.6 | 3.6 | 3.6 |
| Dielectric loss tangent of resin composition | - | $3.0 \times 10^{-4}$ | $2.8 \times 10^{-4}$ | $3.0 \times 10^{-4}$ | $2.8 \times 10^{-4}$ | $3.0 \times 10^{-4}$ | $2.9 \times 10^{-4}$ | $3.4 \times 10^{-4}$ | $3.2 \times 10^{-4}$ | $2.9 \times 10^{-4}$ |

[Table 2]

| | Unit | Comparative Example 1 | Comparative Example 2 | Comparative Example 3 | Comparative Example 4 | Comparative Example 5 |
|---|---|---|---|---|---|---|
| Type of raw material alumina particles | - | DAW-05 | DAW-05 | DAW-05 | ASFP-20 | DAW-05 |
| Heating temperature | °C | 1300 | 1200 | 1300 | 1300 | 1200 |
| Heating time | h | 4 | 4 | 24 | 4 | 4 |
| Surface treatment | - | - | - | - | - | - |
| Average circularity | - | 0.95 | 0.95 | 0.93 | 0.72 | 0.95 |
| Density | $g/cm^3$ | 3.8 | 3.8 | 3.9 | 3.8 | 3.8 |
| Average particle diameter | $\mu m$ | 5.2 | 5.3 | 5.7 | 2.8 | 5.3 |
| $\alpha$-Alumina crystal phase content | % by mass | 76 | 53 | 94 | 98 | 53 |
| Half-width of $\alpha$-alumina (113) peak | ° | 0.127 | 0.129 | 0.126 | 0.158 | 0.129 |
| Content of Li, Na, and K | ppm by mass | 420 | 500 | 390 | Less than 10 | 500 |
| Thermal conductivity of resin composition | W/m-K | 1.0 | 1.0 | 1.1 | 0.93 | 1.0 |
| Dielectric constant of resin composition | - | 3.6 | 3.5 | 3.6 | 3.6 | 3.5 |
| Dielectric loss tangent of resin composition | - | $4.5 \times 10^{-4}$ | $5.6 \times 10^{-4}$ | $4.2 \times 10^{-4}$ | $8.3 \times 10^{-4}$ | $5.2 \times 10^{-4}$ |

[Table 3]

| | Unit | Reference Example 1 | Reference Example 2 | Reference Example 3 | Reference Example 4 | Reference Example 5 |
|---|---|---|---|---|---|---|
| Type of raw material alumina particles | - | DAW-05 | DAW-15 | DAW-0105 | DAM-05 | ASFP-20 |
| Average circularity | - | 0.95 | 0.97 | 0.96 | 0.95 | 0.95 |
| Density | $g/cm^3$ | 3.7 | 3.8 | 3.7 | 3.7 | 3.7 |
| Average particle diameter | $\mu m$ | 5.1 | 15.2 | 1.0 | 5.0 | 0.3 |
| $\alpha$-Alumina crystal phase content | % by mass | 38 | 64 | 22 | 35 | 0 |

(continued)

| | Unit | Reference Example 1 | Reference Example 2 | Reference Example 3 | Reference Example 4 | Reference Example 5 |
|---|---|---|---|---|---|---|
| Half-width of $\alpha$-alumina (113) peak | ° | 0.127 | 0.125 | 0.130 | 0.128 | - |
| Thermal conductivity of resin composition | W/m·K | 0.92 | 0.97 | 0.88 | 0.90 | 0.84 |
| Dielectric constant of resin composition | - | 3.5 | 3.6 | 3.5 | 3.5 | 3.4 |
| Dielectric loss tangent of resin composition | - | $7.0 \times 10^{-4}$ | $5.2 \times 10^{-4}$ | $7.8 \times 10^{-3}$ | $6.5 \times 10^{-3}$ | $2.4 \times 10^{-3}$ |

**Claims**

1. Spherical alumina particles comprising 90% by mass or more of an $\alpha$-alumina crystal phase, wherein the spherical alumina particles have

   a half-width of an $\alpha$-alumina (113) peak of 0.124° or less as observed by X-ray diffraction and
   an average particle diameter of 0.5 to 40 $\mu$m.

2. The spherical alumina particles according to claim 1, wherein an average circularity of the spherical alumina particles is 0.90 or more.

3. The spherical alumina particles according to claim 1 or 2, wherein a total content of Li, Na, and K in the spherical alumina particles is less than 500 ppm by mass with respect to a total mass of the spherical alumina particles.

4. The spherical alumina particles according to any one of claims 1 to 3, which have been subjected to surface treatment with a surface treatment agent.

5. The spherical alumina particles according to any one of claims 1 to 4, wherein a polyethylene/alumina composite sheet containing 30% by volume of the spherical alumina particles in a polyethylene resin has a dielectric loss tangent of less than $4.0 \times 10^{-4}$ as measured by a resonator method at 30 to 40 GHz.

6. A method for producing the spherical alumina particles according to any one of claims 1 to 5, the method comprising the step of:
   heating raw material alumina particles having an average particle diameter of 0.5 to 40 $\mu$m and an average circularity of 0.90 or more at 1350 to 1700°C.

7. A resin composition comprising the spherical alumina particles according to any one of claims 1 to 5 and a resin.

8. The resin composition according to claim 7, wherein a content of the spherical alumina particle in the resin composition is 2 to 90% by mass.

9. The resin composition according to claim 7 or 8, wherein the resin is at least one selected from the group consisting of a hydrocarbon-based elastomer, a polyphenylene ether, and an aromatic polyene-based resin.

10. The resin composition according to any one of claims 7 to 9, which is a resin composition for high-frequency substrates.

Fig. 1

## INTERNATIONAL SEARCH REPORT

International application No.

**PCT/JP2022/002097**

### A. CLASSIFICATION OF SUBJECT MATTER

*C01F 7/021*(2022.01)i; *C08K 3/22*(2006.01)i; *C08K 9/00*(2006.01)i; *C08L 9/00*(2006.01)i; *C08L 25/02*(2006.01)i; *C08L 71/12*(2006.01)i; *C08L 101/00*(2006.01)i
FI: C01F7/021; C08K3/22; C08L71/12; C08L9/00; C08L25/02; C08K9/00; C08L101/00

According to International Patent Classification (IPC) or to both national classification and IPC

### B. FIELDS SEARCHED

Minimum documentation searched (classification system followed by classification symbols)

C01F7/021; C08K3/22; C08K9/00; C08L9/00; C08L25/02; C08L71/12; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-9140 A (HITACHI CHEMICAL CO., LTD.) 20 January 2014 (2014-01-20) claims 1-2, paragraphs [0001], [0008], [0020], [0024], [0033], table 1 | 1-2, 4-10 |
| Y | claims 1-2, paragraphs [0001], [0008], [0020], [0024], [0033], table 1 | 3 |
| Y | JP 2012-241029 A (DENKI KAGAKU KOGYO K.K.) 10 December 2012 (2012-12-10) paragraphs [0048], [0049] | 3 |
| A | WO 2008/053536 A1 (DENKI KAGAKU KOGYO K.K.) 08 May 2008 (2008-05-08) entire text | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/002097**

| Patent document cited in search report | | | Publication date (day/month/year) | Patent family member(s) | | | Publication date (day/month/year) |
|---|---|---|---|---|---|---|---|
| JP | 2014-9140 | A | 20 January 2014 | (Family: none) | | | |
| JP | 2012-241029 | A | 10 December 2012 | (Family: none) | | | |
| WO | 2008/053536 | A1 | 08 May 2008 | US | 2010/0051855 | A1 | |
| | | | | entire text | | | |
| | | | | CN | 101528604 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4361997 B
- JP 6603777 B
- JP 6755116 B
- JP 2015193704 A
- WO 2016114287 A
- JP 8208856 A
- WO 201775270 A

- JP 2009167268 A
- JP 2011068713 A
- JP 2018131519 A
- WO 2016534549 A
- JP 2017057352 A
- WO 2016175325 A
- WO 2016175326 A

**Non-patent literature cited in the description**

- **MASANAO KAWABE et al.** Syntheses of Multi-Functional Aromatic Copolymers (PDVs) with Controlled Molecular Architectures and Development of Novel Low Dielectric Loss Materials from PDVs. *Journal of the Japan Institute of Electronics Packaging,* 2009, vol. 12 (2), 125